(19) Europäisches Patentamt
European Patent Office
Office européen des brevets

(11) **EP 4 510 563 A1**

(12) **EUROPEAN PATENT APPLICATION**
published in accordance with Art. 153(4) EPC

(43) Date of publication:
**19.02.2025 Bulletin 2025/08**

(21) Application number: 23788566.0

(22) Date of filing: **11.04.2023**

(51) International Patent Classification (IPC):
*H04N 19/105* (2014.01)    *H04N 19/577* (2014.01)
*H04N 19/70* (2014.01)    *H04N 19/52* (2014.01)
*H04N 19/176* (2014.01)

(52) Cooperative Patent Classification (CPC):
**H04N 19/105; H04N 19/176; H04N 19/52;
H04N 19/577; H04N 19/70**

(86) International application number:
**PCT/KR2023/004849**

(87) International publication number:
**WO 2023/200217 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.04.2022 US 202263329859 P**

(71) Applicant: **LG Electronics Inc.**
**Yeongdeungpo-gu**
**Seoul 07336 (KR)**

(72) Inventors:
• **NAM, Jung Hak**
  **Seoul 06772 (KR)**
• **LIM, Jaehyun**
  **Seoul 06772 (KR)**
• **PARK, Nae Ri**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD USING TEMPLATE MATCHING, METHOD FOR TRANSMITTING BITSTREAM, AND RECORDING MEDIUM HAVING BITSTREAM STORED THEREIN**

(57) An image encoding/decoding method, a method of transmitting a bitstream and a computer-readable recording medium storing a bitstream are provided. An image decoding method is performed by an image decoding apparatus. The image decoding method comprises determining information about template matching for a current block on which a template matching-based technology is performed, calculating a template matching cost based on the determined information about template matching, and performing the template matching-based technology based on the calculated template matching cost.

FIG. 17

EP 4 510 563 A1

**Description**

**Technical Field**

The present disclosure relates to an image encoding/decoding method using template matching (TM), a method of transmitting a bitstream and a recording medium storing a bitstream, and, more particularly, to a method of performing inter prediction using template matching.

**Background Art**

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

**Disclosure**

**Technical Problem**

An object of the present disclosure is to provide an image encoding/decoding method and apparatus with improved encoding/decoding efficiency.

Another object of the present disclosure is to provide a method of performing inter prediction using template matching.

Another object of the present disclosure is to provide a method of signaling (transmitting or receiving) additional information (such as the size of a template, a cost function for calculating a template matching cost, and application of a weight to the template matching cost) required when using a coding tool based on template matching.

Another object of the present disclosure is to provide various methods for calculating a more accurate template matching cost based on various conditions.

Another object of the present disclosure is to provide a non-transitory computer-readable recording medium storing a bitstream generated by an image encoding method according to the present disclosure.

Another object of the present disclosure is to provide a non-transitory computer-readable recording medium storing a bitstream received, decoded and used to reconstruct an image by an image decoding apparatus according to the present disclosure.

Another object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

**Technical Solution**

An image decoding method according to an aspect of the present disclosure is performed by an image decoding apparatus. The image decoding method may comprise determining information about template matching for a current block on which a template matching-based technology is performed, calculating a template matching cost based on the determined information about template matching, and performing the template matching-based technology based on the calculated template matching cost.

In the image decoding method according to the present disclosure, the information about template matching may comprise information about a size of a template for calculating the template matching cost or information about a difference based function for calculating the template matching cost.

In the image decoding method according to the present disclosure, the information about the size of the template or the information about the difference based function may be included and signaled in a high level of the current block.

In the image decoding method according to the present disclosure, the information about the size of the template or the information about the difference based function may vary depending on the template matching-based technology.

In the image decoding method according to the present disclosure, a template for calculating the template matching cost may be adaptively determined based on encoding information of the current block or a size of the current block.

In the image decoding method according to the present disclosure, a template for calculating the template matching cost may be adaptively determined based on comparison between the size of the current block and a predetermined threshold.

In the image decoding method according to the present disclosure, a template for calculating the template matching cost may be adaptively determined based on a position or type of a merge candidate that is a target of template matching cost calculation.

In the image decoding method according to the present disclosure, a template for calculating the template matching cost may be adaptively determined based on a magnitude of a motion vector or a directionality of a motion vector that is a target of template matching cost calculation.

In the image decoding method according to the present disclosure, the template matching cost may be adjusted by a weighted sum of the template matching cost and a spatial similarity cost, and the spatial similarity cost may be derived based on a difference between a reference template adjacent to a reference block and a pixel value of a pixel in the reference block adjacent to the reference template.

In the image decoding method according to the present disclosure, a weight of the weighted sum may be included and signaled in a high level of the current block or may be derived based on a size of the current block or encoding information of the current block.

In the image decoding method according to the present disclosure, the template matching cost may be adjusted to a value obtained by applying a weight to the template matching cost.

In the image decoding method according to the present disclosure, the weight may be adaptively determined based on a position or type of a merge candidate that is a target of template matching calculation.

In the image decoding method according to the present disclosure, the weight may be adaptively determined based on a magnitude of a motion vector or directionality of the motion vector that is a target of template matching cost calculation.

An image encoding method according to another aspect of the present disclosure may perform operation corresponding to the image decoding method according to an aspect of the present disclosure.

An image encoding method according to the present disclosure is performed by an image encoding apparatus. The image encoding method may comprise determining information about template matching for a current block on which a template matching-based technology is performed, calculating a template matching cost based on the determined information about template matching, and performing the template matching-based technology based on the calculated template matching cost.

A computer-readable recording medium according to another aspect of the present disclosure can store a bitstream generated by the image encoding method or apparatus of the present disclosure.

A transmission method according to another aspect of the present disclosure may transmit a bitstream generated by the image encoding method or apparatus of the present disclosure.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

According to the present disclosure, it is possible to provide a method of performing inter prediction using template matching.

According to the present disclosure, it is possible to efficiently perform template matching-based coding by providing a method of signaling (transmitting or receiving) additional information (such as the size of a template, a cost function for calculating a template matching cost, and application of a weight to the template matching cost) required when using a coding tool based on template matching.

According to the present disclosure, it is possible to provide various methods for calculating a more accurate template matching cost based on various conditions.

According to the present disclosure, it is possible to provide a non-transitory computer-readable recording medium storing a bitstream generated by an image encoding method according to the present disclosure.

According to the present disclosure, it is possible to provide a non-transitory computer-readable recording medium storing a bitstream received, decoded and used to reconstruct an image by an image decoding apparatus according to the present disclosure.

According to the present disclosure, it is possible to provide a method of transmitting a bitstream generated by an image encoding method according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a view schematically showing an inter prediction unit of an image encoding apparatus.

FIG. 5 is a flowchart illustrating a method of decoding an image based on inter prediction.

FIG. 6 is a view schematically showing an inter prediction unit of an image decoding apparatus.

FIG. 7 is a flowchart illustrating a method of decoding an image based on inter prediction.

FIG. 8 is a flowchart illustrating an inter prediction method.

FIG. 9 is a diagram for explaining a template matching-based encoding/decoding method according to the present disclosure.

FIG. 10 is a diagram exemplarily illustrating a template of a current block and reference samples of templates in reference pictures.

FIG. 11 is a diagram for explaining a method of specifying a template using motion information of a sub-block.

FIG. 12 is a diagram for explaining an image decoding method according to the present disclosure.

FIG. 13 is a diagram for explaining an image encoding method according to the present disclosure.

FIG. 14 is a diagram for explaining various examples of selectable templates according to an embodiment of the present disclosure.

FIG. 15 is a diagram for explaining various examples of selectable templates according to another embodiment of the present disclosure.

FIG. 16 is a diagram illustrating a template of a reference block and a boundary pixel of the reference block for calculating a spatial similarity cost.

FIG. 17 is a diagram for explaining an image decoding/encoding method according to the present disclosure.

FIG. 18 is a view showing a content streaming system to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block". In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

## Overview of video coding system

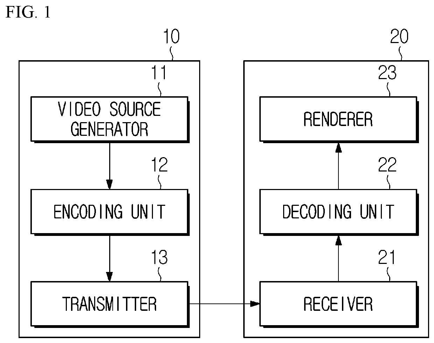

FIG. 1 is a view showing a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

## Overview of image encoding apparatus

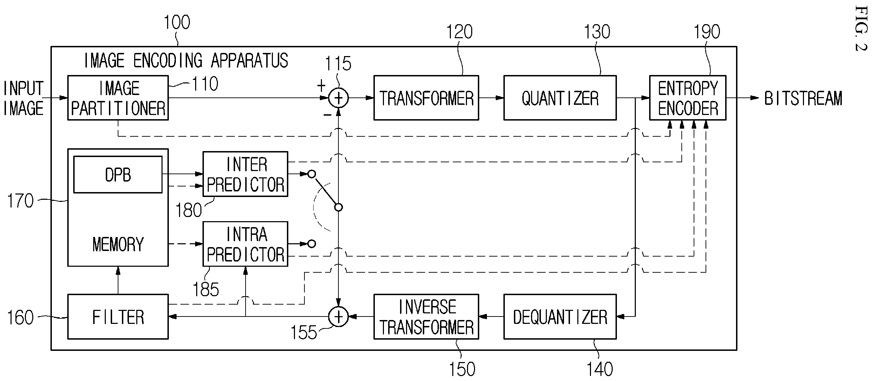

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

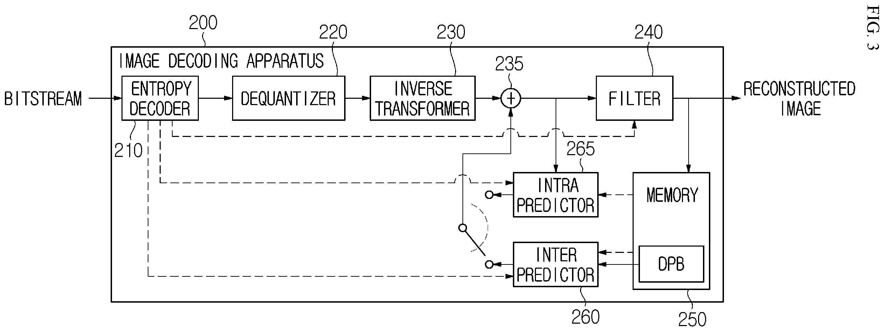

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra prediction unit 265. The inter predictor(inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra prediction unit 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

## Inter prediction

The prediction unit of the image encoding apparatus 100 and the image decoding apparatus 200 may derive a prediction sample by performing inter prediction on a per-block basis. Inter prediction can be a prediction derived in a manner that is dependent on data elements (e.g., sample values or motion information) of picture(s) other than the current picture. When inter prediction is applied to a current block, a predicted block (a prediction sample array) for the current block may be derived on the basis of a reference block (a reference sample array) specified by a motion vector on a reference picture indicated by a reference picture index. Herein, in order to reduce the amount of motion information transmitted in the inter prediction mode, the motion information of the current block may be predicted on a per block, subblock, or sample basis on the basis of the correlation of motion information between a neighboring block and the current block. The motion information may include a motion vector and a reference picture index. The motion information may further include inter prediction type (L0 prediction, L1 prediction, Bi prediction, etc.) information. When inter prediction is applied, neighboring blocks may include a spatial neighboring block present in the current picture and a temporal neighboring block present in the reference picture. The reference picture including the reference block and the reference picture including the temporal neighboring block may be the same or different. The temporal neighboring block may be called a collocated reference block or a collocated CU (colCU). The reference picture including the temporal neighboring block may be called a collocated picture (colPic). For example, a motion information candidate list may be constructed on the basis of neighboring blocks of the current block. A flag or index information indicating which candidate is selected (used) to derive a motion vector and/or a reference picture index of the current block may be signaled. Inter prediction may be performed on the basis of various prediction modes. For example, in the case of a skip mode and a merge mode, motion information of a current block may be the same as motion information of a selected neighboring block. In the case of the skip mode, unlike the merge mode, the residual signal may not be transmitted. In the case of a motion information prediction (motion vector prediction, MVP) mode, a motion vector of a selected neighboring block may be used as a motion vector predictor, and a motion vector difference may be signaled. In this case, a motion vector of the current block may be derived using the sum of the motion vector predictor and the motion vector difference.

The motion information may include L0 motion information and/or L1 motion information according to an inter prediction type (L0 prediction, L1 prediction, Bi prediction, etc.). A motion vector in the L0 direction may be called an L0 motion vector or MVL0, and a motion vector in the L1 direction may be called an L1 motion vector or MVL1. The prediction based on the L0 motion vector may be called L0 prediction. The prediction based on the L1 motion vector may be called L1 prediction. The prediction based on both the L0 motion vector and the L1 motion vector may be called bi-prediction. Herein, the L0 motion vector may refer to a motion vector associated with a reference picture list L0 (L0), and the L1 motion vector may refer to a motion vector associated with a reference picture list L1 (L1). The reference picture list L0 may include, as reference pictures, pictures preceding the current picture in terms of output order. The reference picture list L1 may include pictures following the current picture in terms of output order. The preceding pictures may be called forward (reference) pictures, and the following pictures may be called backward (reference) pictures. The reference picture list L0 may further include, as reference pictures, pictures following the current picture in terms of output order. In this case, within the reference picture list L0, the preceding pictures may be indexed first, and the following pictures may be indexed next. The reference picture list L1 may further include, as reference pictures, pictures preceding the current picture in terms of output order. In this case, within the reference picture list1, the following pictures may be indexed first, and the preceding pictures may be indexed next. Herein, the output order may correspond to the picture order count (POC) order.

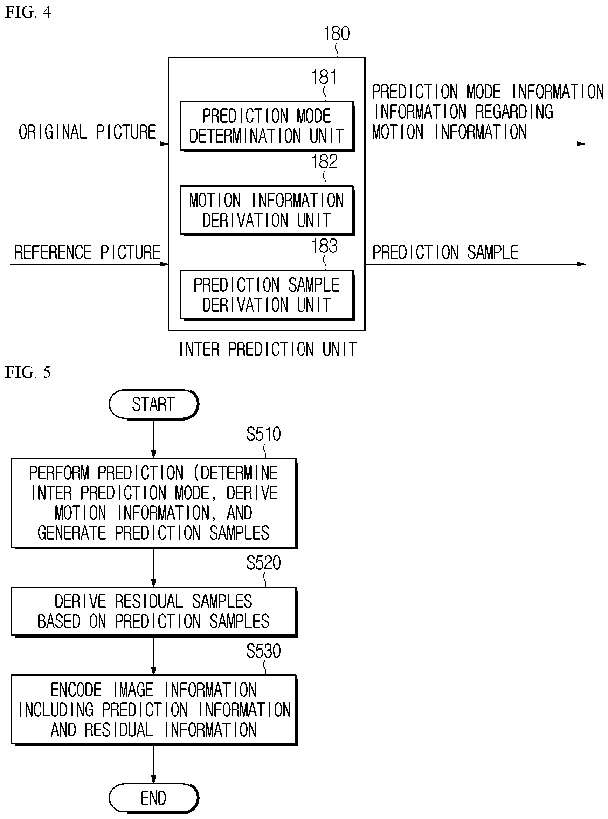

FIG. 4 is a diagram schematically showing the inter prediction unit 180 of the image encoding apparatus 100, and FIG. 5 is a flowchart showing a method of encoding an image based on inter prediction.

The image encoding apparatus 100 may perform inter prediction on a current block (S510). The image encoding apparatus 100 may derive an inter prediction mode and motion information of the current block, and may generate prediction samples of the current block. Herein, the procedures of determination of the inter prediction mode, derivation of the motion information, and generation of the prediction samples may be performed simultaneously, or any one procedure may be performed before the other procedures. For example, the inter prediction unit 180 of the image encoding apparatus 100 may include a prediction mode determination unit 181, a motion information derivation unit 182, and a prediction sample derivation unit 183. The prediction mode determination unit 181 may determine the prediction mode for the current block. The motion information derivation unit 182 may derive the motion information of the current block. The prediction sample derivation unit 183 may derive the prediction samples of the current block. For example, the inter prediction unit 180 of the image encoding apparatus 100 may search a predetermined area (search area) of reference pictures for a block similar to the current block through motion estimation, and may derive a reference block of which the difference from the current block is a minimum or less than or equal to a predetermined standard. On the basis of this, a reference picture index indicating the reference picture in which the reference block is located may be derived, and a motion vector may be derived on the basis of the location difference between the reference block and the current block. The image encoding apparatus 100 may determine a mode applied to the current block among various prediction modes. The image encoding apparatus 100 may compare RD costs for the various prediction modes and may determine the optimum prediction mode for the current block.

For example, when the skip mode or the merge mode is applied to the current block, the image encoding apparatus 100 may construct a merge candidate list described later, and may derive a reference block of which the difference from the current block is a minimum or less than or equal to a predetermined standard, among reference blocks indicated by merge candidates included in the merge candidate list. In this case, the merge candidate associated with the derived reference block may be selected, and merge index information indicating the selected merge candidate may be generated and signaled to the decoding apparatus. The motion information of the current block may be derived using the motion information of the selected merge candidate.

As another example, when the (A)MVP mode is applied to the current block, the image encoding apparatus 100 may construct an (A)MVP candidate list described later, and may use, as a motion vector predictor (mvp) of the current block, a motion vector of an mvp candidate selected among mvp candidates included in the (A)MVP candidate list. In this case, for example, a motion vector indicating a reference block derived by the above-described motion estimation may be used as a motion vector of the current block. Among the mvp candidates, an mvp candidate having the motion vector having the minimum difference from the motion vector of the current block may be the selected mvp candidate. A motion vector difference (MVD) that is a difference resulting from subtracting the mvp from the motion vector of the current block may be derived. In this case, information on the MVD may be signaled to the image decoding apparatus 200. In addition, when the (A)MVP mode is applied, a value of the reference picture index may be constructed as reference picture index information and may be separately signaled to the image decoding apparatus 200.

The image encoding apparatus 100 may derive residual samples on the basis of the prediction samples (S520). The image encoding apparatus 100 may compare the prediction samples with the original samples of the current block to derive the residual samples.

The image encoding apparatus 100 may encode image information including prediction information and residual information (S530). The image encoding apparatus 100 may output the encoded image information in the form of a bitstream. The prediction information is pieces of information related to the prediction procedure, and may include prediction mode information (e.g., a skip flag, a merge flag, or a mode index) and information on motion information. The information on the motion information may include candidate selection information (e.g., a merge index, an mvp flag, or an mvp index) that is information for deriving a motion vector. In addition, the information on the motion information may include the information on the MVD and/or the reference picture index information described above. In addition, the information on the motion information may include information indicating whether L0 prediction, L1 prediction, or bi-prediction is applied. The residual information is information on the residual samples. The residual information may include information on quantized transform coefficients for the residual samples.

The output bitstream may be stored in a (digital) storage medium and transmitted to the decoding apparatus, or may be transmitted to the image decoding apparatus 200 over a network.

In the meantime, as described above, the image encoding apparatus 100 may generate a reconstructed picture (including reconstructed samples and a reconstructed block) on the basis of the reference samples and the residual samples. This is to derive the same prediction result by the image encoding apparatus 100 as that performed in the image decoding apparatus 200, and through this, coding efficiency may be increased. Accordingly, the image encoding apparatus 100 may store a reconstructed picture (or reconstructed samples, a reconstructed block) in a memory, and may use the same as a reference picture for inter prediction. As described above, an in-loop filtering procedure may be further applied to the reconstructed picture.

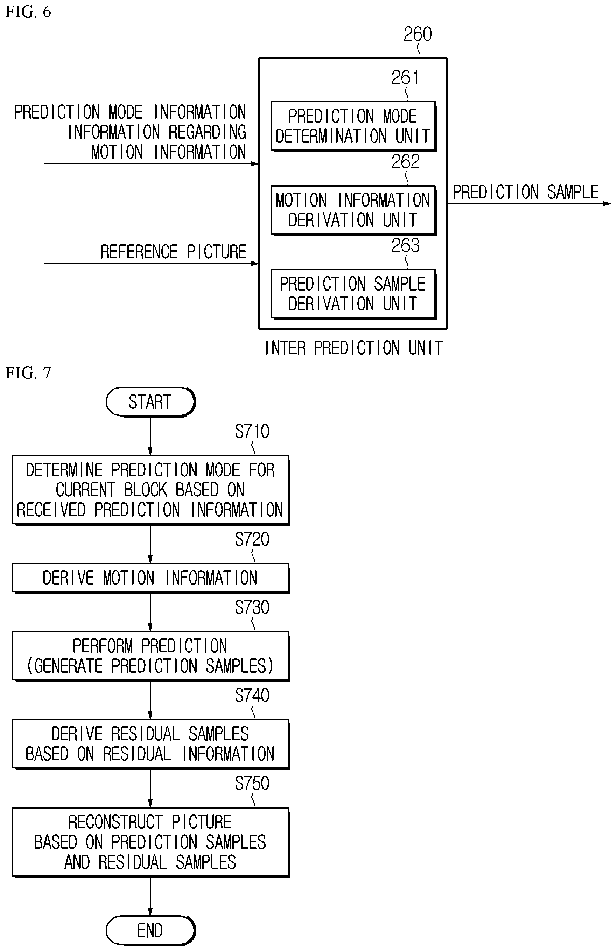

FIG. 6 is a diagram schematically showing the inter prediction unit 260 of the image decoding apparatus 200, and FIG. 7 is a flowchart showing a method of decoding an image based on inter prediction.

The image decoding apparatus 200 may perform the operation corresponding to the operation performed by the image encoding apparatus 100. The image decoding apparatus 200 may perform prediction on the current block on the basis of the received prediction information and may derive prediction samples.

Specifically, the image decoding apparatus 200 may determine a prediction mode for the current block on the basis of the received prediction information (S710). The image decoding apparatus 200 may determine which inter prediction mode is applied to the current block on the basis of the prediction mode information in the prediction information.

For example, on the basis of the merge flag, it may be determined whether the merge mode is applied to the current block or the (A)MVP mode is determined. Alternatively, one of various inter prediction mode candidates may be selected on the basis of the mode index. The inter prediction mode candidates may include a skip mode, a merge mode, and/or an (A)MVP mode, or may include various inter prediction modes described later.

The image decoding apparatus 200 may derive motion information of the current block on the basis of the determined inter prediction mode (S720). For example, when the skip mode or the merge mode is applied to the current block, the image decoding apparatus 200 may construct a merge candidate list described later, and may select one merge candidate among merge candidates included in the merge candidate list. The selection may be performed on the basis of the above-described selection information (a merge index). The motion information of the current block may be derived using the motion information of the selected merge candidate. The motion information of the selected merge candidate may be used as the motion information of the current block.

As another example, when the (A)MVP mode is applied to the current block, the image decoding apparatus 200 may construct an (A)MVP candidate list described later, and may use, as a motion vector predictor (mvp) of the current block, a motion vector of an mvp candidate selected among mvp candidates included in the (A)MVP candidate list. The selection may be performed on the basis of the above-described selection information (an mvp flag or an mvp index). In this case, the MVD of the current block may be derived on the basis of the information on the MVD, and the motion vector of the current block may be derived on the basis of the mvp of the current block and the MVD. In addition, a reference picture index of the current block may be derived on the basis of the reference picture index information. A picture indicated by the reference picture index in the reference picture list related to the current block may be derived as a reference picture that is referenced for inter prediction of the current block.

In the meantime, as will be described later, the motion information of the current block may be derived without constructing a candidate list. In this case, the motion information of the current block may be derived according to a procedure described in a prediction mode described later. In this case, the candidate list configuration as described above may be omitted.

The image decoding apparatus 200 may generate prediction samples for the current block on the basis of the motion information of the current block (S730). In this case, the reference picture may be derived on the basis of the reference picture index of the current block, and the prediction samples of the current block may be derived using samples of a reference block indicated on the reference picture by the motion vector of the current block. In this case, as described later, in some cases, a prediction sample filtering procedure may be further performed on all or some of the prediction samples of the current block.

For example, the inter prediction unit 260 of the image decoding apparatus 200 may include a prediction mode determination unit 261, a motion information derivation unit 262, and a prediction sample derivation unit 263. The prediction mode determination unit 181 may determine the prediction mode for the current block on the basis of received prediction mode information. The motion information derivation unit 182 may derive the motion information (a motion vector and/or a reference picture index) of the current block on the basis of received information on the motion information. The prediction sample derivation unit 183 may derive the prediction samples of the current block.

The image decoding apparatus 200 may generate residual samples for the current block on the basis of the received residual information (S740). The image decoding apparatus 200 may generate reconstructed samples for the current block on the basis of the prediction samples and the residual samples, and may generate, on the basis of this, a reconstructed picture (S750). Afterward, as described above, an in-loop filtering procedure may be further applied to the reconstructed picture.

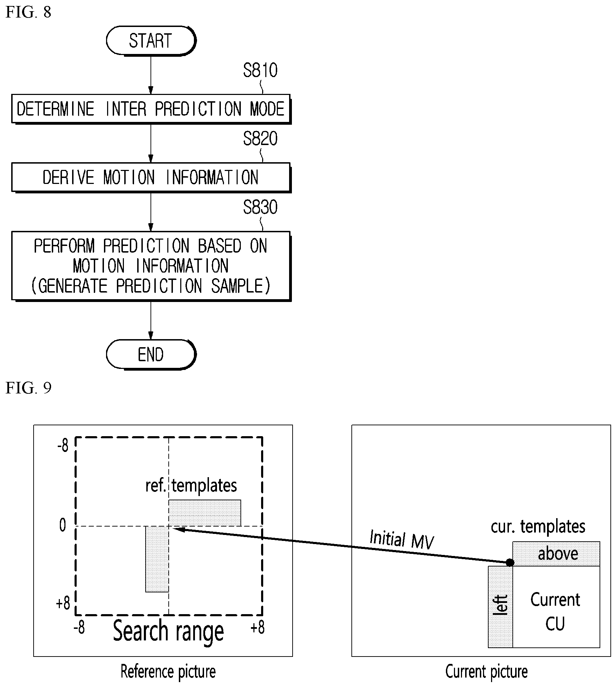

Referring to FIG. 8, the inter prediction procedure may include the steps of determining an inter prediction mode (S810), deriving motion information according to the determined prediction mode (S820), and performing prediction based on the derived motion information (generating a prediction sample)(S830). The inter prediction procedure may be performed in the image encoding apparatus 100 and the image decoding apparatus 200 as described above.

## Inter prediction mode determination

Various inter prediction modes may be used for prediction of the current block in the picture. For example, various modes, such as a merge mode, a skip mode, a motion vector prediction (MVP) mode, an affine mode, a subblock merge mode, and a merge with MVD (MMVD) mode, and the like may be used. A decoder side motion vector refinement (DMVR) mode, an adaptive motion vector resolution (AMVR) mode, a bi-prediction with CU-level weight (BCW), a bi-directional optical flow (BDOF), and the like may also be used as additional modes additionally or instead. The affine mode may be called an affine motion prediction mode. The MVP mode may be referred to as advanced motion vector prediction (AMVP) mode. In this document, some modes and/or motion information candidates derived by some modes may be included as one of motion information candidates of other modes. For example, an HMVP candidate may be added as a merge candidate in the merge/skip mode or may be added as an mvp candidate in the MVP mode.

Prediction mode information indicating the inter prediction mode of the current block may be signaled from the image encoding apparatus 100 to the image decoding apparatus 200. The prediction mode information may be included in the bitstream and received by the image decoding apparatus 200. The prediction mode information may include index information indicating one of a plurality of candidate modes. Alternatively, the inter prediction mode may be indicated through hierarchical signaling of flag information. In this case, the prediction mode information may include one or more flags. For example, a skip flag may be signaled to indicate whether a skip mode is applied, and if the skip mode is not applied, a merge flag may be signaled to indicate whether a merge mode is applied, and if the merge mode is not applied, it is indicated to apply an MVP mode or a flag for additional classification may be further signaled. The affine mode may be signaled in an independent mode or may be signaled in a mode dependent on the merge mode or the MVP mode. For example, the affine mode may include an affine merge mode and an affine MVP mode.

### Derivation of motion information

Inter prediction may be performed using motion information of the current block. The image encoding apparatus 100 may derive optimal motion information for the current block through a motion estimation procedure. For example, the image encoding apparatus 100 may search for a similar reference block having a high correlation in units of fractional pixels within a predetermined search range in the reference picture using the original block in the original picture for the current block, thereby deriving motion information. Similarity of blocks may be derived based on a difference of phase based sample values. For example, the similarity of the blocks may be calculated based on the SAD between the current block (or template of the current block) and the reference block (or template of the reference block). In this case, motion information may be derived based on a reference block having the smallest SAD in the search area. The derived motion information may be signaled to the image decoding apparatus 200 according to various methods based on the inter prediction mode.

### Generation of prediction sample

A predicted block for the current block may be derived based on motion information derived according to the prediction mode. The predicted block may include prediction samples (prediction sample array) of the current block. When the motion vector of the current block indicates a fractional sample unit, an interpolation procedure may be performed, through which prediction samples of the current block may be derived based on reference samples in the fractional sample unit within a reference picture. When affine inter prediction is applied to the current block, prediction samples may be generated based on a sample/subblock unit MV. When bi-prediction is applied, prediction samples derived through weighting or weighted averaging (according to phase) of prediction samples derived based on L0 prediction (that is, prediction using reference picture and MVL0 in reference picture list L0) and prediction samples derived based on L1 prediction (that is, prediction using reference picture and MVL1 in reference picture list L1) may be used as prediction samples of the current block. When bi-prediction is applied, if the reference picture used for L0 prediction and the reference picture used for L1 prediction are located in different temporal directions with respect to the current picture (i.e., bi-prediction and bidirectional prediction), it may be called true bi-prediction.

As described above, reconstructed samples and reconstructed pictures may be generated based on the derived prediction samples, and thereafter, a procedure such as in-loop filtering may be performed.

### Template matching (TM)

FIG. 9 is a diagram for explaining a template matching-based encoding/decoding method according to the present disclosure.

Template Matching (TM) is a motion vector derivation method performed at a decoder stage, and is a method of refining motion information of a current block by finding a template (hereinafter referred to as "reference template") in a reference picture which is most similar to a template (hereinafter referred to as "current template") adjacent to the current block (e.g., current coding unit, current CU). The current template may be a top neighboring block and/or a left neighboring block of the current block, or may be some of these neighboring blocks. Additionally, the reference template may be determined to have the same size as the current template.

As shown in FIG. 9, when an initial motion vector of the current block is derived, a search for a better motion vector may be performed in the surrounding area of the initial motion vector. For example, the range of the surrounding area where the search is performed may be within the [-8, +8]-pel search area centered on the initial motion vector. Additionally, the size of the search step for performing the search may be determined based on the AMVR mode of the current block. Additionally, template matching may be performed continuously with a bilateral matching process in the merge mode.

If the prediction mode of the current block is the AMVP mode, a motion vector predictor candidate (MVP candidate) may be determined based on a template matching error. For example, a motion vector predictor candidate (MVP candidate) that minimizes an error between the current template and the reference template may be selected. After that, template matching for refining a motion vector may be performed on the selected motion vector predictor candidate. At this time, template matching for refining a motion vector may not be performed on motion vector predictor candidates that are not selected.

More specifically, the refinement of the selected motion vector predictor candidate may start from full-pel (integer-pel) accuracy within the [-8, +8]-pel search area using an iterative diamond search. Alternatively, in the case of a 4-pel AMVR mode, it may start from 4-pel accuracy. After that, a search with half-pel and/or quarter-pel accuracy may follow depending on the AMVR mode. According to the search process, the motion vector predictor candidate may maintain the same motion vector accuracy as indicated by the AMVR mode even after the template matching process. In the iterative search process, if a difference between a previous minimum cost and a current minimum cost is less than an arbitrary threshold, the search process is terminated. The threshold may be equal to the area of a block, i.e., the number of samples in the block. Table 1 shows examples of search patterns according to the AMVR mode and the merge mode accompanied with AMVR.

[Table 1]

| Search pattern | AMVR mode | | | | Merge mode | |
|---|---|---|---|---|---|---|
| | 4-pel | Full-pel | Half-pel | Quarter-pel | AltIF=0 | AltIF=1 |
| 4-pel diamond | v | | | | | |
| 4-pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| 1/8-pel cross | | | | | v | |

If the prediction mode of the current block is the merge mode, a similar search method may be applied to the merge candidate indicated by the merge index. As shown in Table 1 above, template matching may be performed up to 1/8-pel accuracy or half-pel accuracy or lower may be skipped, which may be determined depending on whether an alternative interpolation filter is used according to the merge motion information. In this case, the alternative interpolation filter may be a filter used when AMVR is the half-pel mode. In addition, if template matching is available, depending on whether bilateral matching (BM) is available, the template matching may operate as an independent process, or may operate as an additional motion vector refinement process between block-based bilateral matching and sub-block-based bilateral matching. Whether the template matching is available and/or whether the bilateral matching is available may be determined according to an availability condition check. In the above, the accuracy of the motion vector may mean the accuracy of a motion vector difference (MVD).

**Adaptive reordering of merge candidates with template matching (ARMC-TM)**

Merge candidates may be adaptively reordered through template matching. The reordering method may be applied to a regular merge mode, a template matching (TM) merge mode, and an affine merge mode (except for SbTMVP candidate). In the case of the TM merge mode, the reordering of the merge candidates may be performed before the above-described motion vector refinement process.

After a merge candidate list is constructed, merge candidates may be divided into one or more subgroups. The size of the subgroup for the regular merge mode and the TM merge mode may be 5. In addition, the size of the subgroup for the affine merge mode may be 3. The merge candidates in each subgroup may be reordered in ascending order according to cost values based on template matching. For simplicity, the merge candidates in the last subgroup, not the first subgroup, may not be reordered.

The template matching cost of a merge candidate may be measured by the sum of absolute differences (SAD) between samples of a template of a current block and reference samples corresponding thereto. At this time, the template may include a set of reconstructed samples neighboring the current block. The reference samples of the template may be located by motion information of the merge candidate.

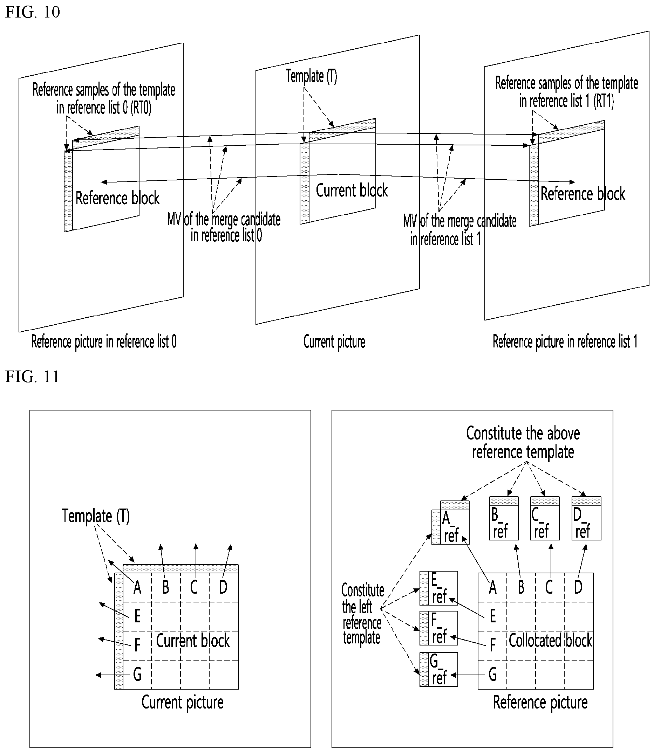

FIG. 10 is a diagram exemplarily illustrating a template of a current block and reference samples of templates in reference pictures. When a merge candidate uses bi-prediction, reference samples of the template of the merge candidate may be generated as illustrated in FIG. 10. Specifically, after a reference block of a reference picture in list 0 is specified based on a list 0 (L0) motion vector of a merge candidate of a current block, a reference template (reference template 0, RT0) of the reference picture in list 0 may be specified. Similarly, after a reference block of a reference picture in list 1 is specified based on a list 1 (L1) motion vector of a merge candidate of a current block, a reference template (reference template 1, RT1) of a reference picture in list 1 may be specified.

For a sub-block-based merge candidate where the size of a sub-block is $Wsub \times Hsub$, an upper template may include one or more sub-templates with a size of $Wsub \times 1$, and a left template may include one or more sub-templates with a size of $1 \times Hsub$.

FIG. 11 is a diagram for explaining a method of specifying a template using motion information of a sub-block.

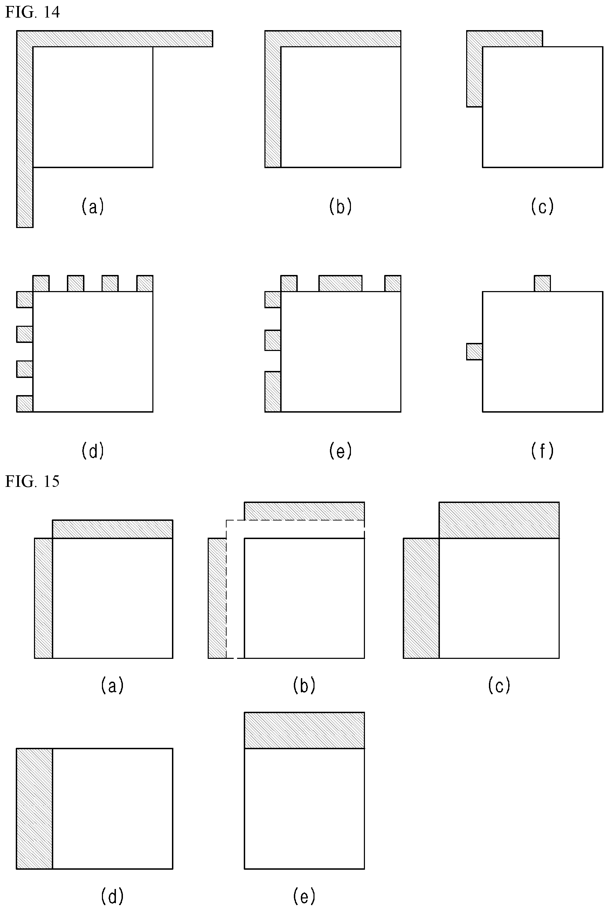

In the example illustrated in FIG. 11, reference samples of each sub-template may be derived using motion information of sub-blocks included in a first column and first row of a current block. More specifically, reference sub-blocks (A_ref, B_ref, C_ref, D_ref, E_ref, F_ref, G_ref) corresponding to a reference picture may be specified using motion vectors of sub-blocks (A, B, C, D, E, F, G) included in the first column and first row of the current block in the current picture. For example, the location of the corresponding reference sub-block may be specified from a collocated block in the reference picture based on the motion vector of each sub-block. Thereafter, reference templates may be constituted from a reconstructed region adjacent to each reference sub-block. As illustrated in FIG. 15, when the size of a sub-block is $Wsub \times Hsub$, an upper reference template may include one or more sub-reference templates with a size of $Wsub \times 1$, and a left reference template may include one or more sub-reference templates with a size of $1 \times Hsub$.

In the present disclosure, template matching may be a process of searching for a reference template with the highest similarity to a current template. According to the present disclosure, a template matching cost (TM cost) may be calculated to measure the similarity, and a cost function such as SAD may be used for this purpose. A high template matching cost may mean that the template matching error is large and therefore the similarity between templates is low. Conversely, a small template matching cost may mean that the template matching error is small and therefore the similarity between templates is high.

In the present disclosure, the cost function for calculating the template matching cost may be a function that uses a difference between a sample value in the current template and a corresponding sample value in the reference template. Therefore, the cost function may be referred to as a "difference(error)-based function" or "difference(error)-based equation" between corresponding samples in two templates. In addition, the template matching cost calculated by the cost function may be referred to as a "difference (error)-based function value" or "difference (error)-based value" between corresponding samples in two templates.

Hereinafter, various embodiments according to the present disclosure will be described with reference to the drawings.

Various embodiments of the present disclosure relate to the above-described template matching-based encoding/decoding operation, such as a motion vector correction (refinement) process based on template matching or a reordering process of a merge candidate list based on template matching. The present disclosure proposes the following aspects (Aspects 1 to 5), and the aspects may be applied individually or in combination with one or more other aspects.

Aspect 1) The size of the template required to calculate the cost of template matching may be transmitted using high-level syntax such as a sequence parameter set (SPS) or a picture parameter set (PPS).

Aspect 2) The cost function for calculating the cost of template matching may be transmitted using high-level syntax such as a sequence parameter set (SPS) or a picture parameter set (PPS).

Aspect 3) The position or size of the template may be variably selected based on the encoding information of the current block or the size information of the current block.

Aspect 4) The cost of template matching may be calculated as a weighted sum of the error of template matching and the spatial similarity cost of the template.

Aspect 5) A weight may be applied to the cost of template matching according to the magnitude of the motion vector, the position of the motion vector, or the type of the motion vector.

## Embodiment 1

According to the present embodiment, the size of a template required to calculate the cost of template matching may be variably set, and information about the size of the template may be signaled. For example, information about the size of the template may be transmitted from an image encoding apparatus to an image decoding apparatus using high-level syntax such as a sequence parameter set (SPS) or a picture parameter set (PPS).

The availability of a method of reordering merge candidates based on template matching may be transmitted at a high level, such as SPS, as shown in Table 2.

[Table 2]

| seq_parameter_set_rbsp( ) { | Descriptor |
|---|---|
| ... | |
| sps_aml_enabled_flag | u(1) |
| ... | |
| } | |

In Table 2 above, sps_aml_enabled_flag may be information indicating whether aml is available in the CLVS (Coded Layer Video Sequence) referencing the SPS. The above aml means an adaptive merge list, and may mean a technology for adaptively reordering a merge list based on a template matching cost. According to the present embodiment, when the aml is available, information about the size of the template for calculating the template matching cost may be additionally signaled, for example, as in Table 3.

[Table 3]

| seq_parameter_set_rbsp( ) { | Descriptor |
|---|---|
| ... | |
| sps_aml_enabled_flag | u(1) |
| if (sps_aml_enable_flag) | |
| sps_aml_tm_size_idx | ue(v) |
| } | |

In Table 3 above, sps_aml_tm_size_idx may be information (index) about the size of a template used in a reordering technique of a merge candidate list based on template matching. According to the index and the table in Table 4, the size of the template may be derived.

[Table 4]

| sps_aml_tm_size_idx | Template size |
|---|---|
| 0 | 1 |
| 1 | 2 |
| 2 | 4 |
| 3 | 8 |

Table 4 above may be predefined in the image encoding apparatus and the image decoding apparatus. The derivation of the template size according to the method is only an example, and for example, the sps_aml_tm_size_idx value may be input into a predetermined equation to derive the size of the template as the result value. For example, the predetermined equation may include left-shifting.

The range of the syntax value and/or the size of the template are only examples, and is not limited to the above-described examples, and various other combinations may be possible.

In addition, information about the size of the template may be transmitted at any other high level, such as a picture parameter set or a picture header, in addition to the above-described SPS.

### Embodiment 2

According to the present embodiment, the size of a template required to calculate the cost of template matching may be variably set, and information about the size of the template may be signaled. For example, information about the size of the template may be transmitted from an image encoding apparatus to an image decoding apparatus using high-level syntax such as a sequence parameter set (SPS) or a picture parameter set (PPS).

The availability of a method correcting (refining) a motion vector based on template matching may be transmitted at a high level, such as SPS, as shown in Table 5.

[Table 5]

| seq_parameter_set_rbsp( ) { | Descriptor |
| --- | --- |
| ... | |
| sps_dmvd_enabled_flag | u(1) |
| ... | |
| } | |

In Table 5 above, sps_dmvd_enabled_flag may be information indicating whether dmvd is available in the CLVS (Coded Layer Video Sequence) referencing the SPS. The dmvd means decoder-side motion vector derivation, and may mean a technology for correcting a motion vector in a decoder based on the template matching cost. According to the present embodiment, when the dmvd is available, information about the size of the template for calculating the template matching cost may be additionally signaled, for example, as in Table 6.

[Table 6]

| seq_parameter_set_rbsp( ) { | Descriptor |
| --- | --- |
| ... | |
| sps_dmvd_enabled_flag | u(1) |
| if (sps_dmvd_enable_flag) | |
| sps_dmvd_tm_size_idx | ue(v) |
| } | |

In Table 6 above, sps_dmvd_tm_size_idx may be information (index) about the size of a template used in a motion vector correction technique based on template matching. According to the index and the table in Table 7, the size of the template may be derived.

[Table 7]

| sps_dmvd_tm_size_idx | Template size |
| --- | --- |
| 0 | 1 |
| 1 | 2 |
| 2 | 4 |
| 3 | 8 |

Table 7 above may be predefined in the image encoding apparatus and the image decoding apparatus. The derivation of the template size according to the method is only an example, and for example, the sps_dmvd_tm_size_idx value may be input into a predetermined equation to derive the size of the template as the result value. For example, the predetermined equation may include left-shifting.

The range of the syntax value and/or the size of the template are only examples, and is not limited to the above-described examples, and various other combinations may be possible.

In addition, information about the size of the template may be transmitted at any other high level, such as a picture parameter set or a picture header, in addition to the above-described SPS.

## Embodiment 3

According to the present embodiment, information about the size of the template may be commonly signaled for techniques based on the template matching cost. For example, information about the size of the template may be transmitted from an image encoding apparatus to an image decoding apparatus using high-level syntax such as a sequence parameter set (SPS) or a picture parameter set (PPS).

According to the present embodiment, the information about the size of the template for calculating the template matching cost, which is common to techniques based on template matching cost, may be signaled, for example, as in Table 8.

[Table 8]

| seq_parameter_set_rbsp( ) { | Descriptor |
|---|---|
| ... | |
| sps_tm_size_idx | ue(v) |
| } | |

In Table 8 above, sps_tm_size_idx may be information (index) on the size of the template commonly used in a technique based on template matching. According to the index and the table in Table 9, the size of the template may be derived.

[Table 9]

| sps_tm_size_idx | Template size |
|---|---|
| 0 | 1 |
| 1 | 2 |
| 2 | 4 |
| 3 | 8 |

Table 9 above may be predefined in the image encoding apparatus and the image decoding apparatus. The derivation of the template size according to the method is only an example, and for example, the sps_tm_size_idx value may be input into a predetermined equation to derive the size of the template as the result value. For example, the predetermined equation may include left-shifting.

The range of the syntax value and/or the size of the template are only examples, and is not limited to the above-described examples, and various other combinations may be possible.

**In** addition, information about the size of the template may be transmitted at any other high level, such as a picture parameter set or a picture header, in addition to the above-described SPS.

The present embodiment relates to signaling of information about the size of the template that is commonly applied to all techniques based on template matching. However, as a modification, when different template sizes are used for each technique, information about the size of the template may be separately signaled for each technique by additionally transmitting separate syntax as in Embodiment 1 or Embodiment 2 above. When the separate syntax is additionally transmitted as described above, the template size for the technique may be derived by the size information separately signaled for the technique instead of the information about the common template size.

As shown in Table 4, Table 7 and Table 9 above, the size of the template may be composed of only the power of 2, and in this case, the size of the template may be derived from the information about the size of the template without table mapping in the form of a logarithm of 2 or a shift. However, it is not limited thereto, and in Embodiments 1 to 3, the size of the template may have a value other than the power of 2. In addition, the size of the template may be different depending on the encoding/decoding tool. For example, the size of the template used for motion vector correction based on template matching may be different from the size of the template used for merge candidate reordering based on template matching. In addition, the size of the template may be defined differently depending on the size or shape of the block. For example, the size of the template for a block larger than a threshold size may be different from the size of the template for a block smaller than a threshold size. In addition, the size of the template when the aspect ratio is greater than or less than a threshold may be different from the size of the template when the ratio is not greater than or less than the threshold.

**Embodiment 4**

According to the present embodiment, a cost function used to calculate the cost of template matching may be variably set, and information about the cost function may be signaled. For example, the information about the cost function may be transmitted from an image encoding apparatus to an image decoding apparatus using high-level syntax such as a sequence parameter set (SPS) or a picture parameter set (PPS).

The availability of a method of reordering merge candidates based on template matching may be transmitted at a high level, such as SPS, as in Table 2 above. Since Table 2 has been described in Embodiment 1, a repeated description will be omitted.

According to the present embodiment, when the aml is available, the information about cost function for calculating the template matching cost may be additionally signaled, for example, as in Table 10.

[Table 10]

| seq_parameter_set_rbsp( ) { | Descriptor |
|---|---|
| ... | |
| sps_aml_enabled_flag | u(1) |
| if (sps_aml_enable_flag) | |
| sps_aml_cost_function_idx | ue(v) |
| } | |

In Table 10 above, sps_aml_cost_function_idx may be information (index) about a cost function used in a technique for reordering a merge candidate list based on template matching. According to the index and the table in Table 11, a cost function may be derived.

[Table 11]

| sps_aml_cost_function_idx | Cost function |
|---|---|
| 0 | SAD |
| 1 | SSE |
| 2 | MR-SAD |
| 3 | HAD |

Table 11 above may be predefined in the image encoding apparatus and the image decoding apparatus. The range of the syntax value and/or the cost function are only examples and are not limited to the above-described examples, and various other combinations may be possible.

In addition, the information about the cost function may be transmitted at any other high level, such as a picture parameter set or a picture header, in addition to the above-described SPS.

## Embodiment 5

According to the present embodiment, a cost function used to calculate the cost of template matching may be variably set, and information about the cost function may be signaled. For example, the information about the cost function may be transmitted from an image encoding apparatus to an image decoding apparatus using high-level syntax such as a sequence parameter set (SPS) or a picture parameter set (PPS).

The availability of a method of correcting (refining) a motion vector based on template matching may be transmitted at a high level, such as SPS, as in Table 5 above. Since Table 5 has been described in Embodiment 2, a repeated description will be omitted.

According to the present embodiment, when the dmvd is available, the information about a cost function for calculating template matching cost may be additionally signaled, for example, as in Table 12.

[Table 12]

| seq_parameter_set_rbsp( ) { | Descriptor |
|---|---|
| ... | |
| sps_dmvd_enabled_flag | u(1) |
| if (sps_dmvd_enable_flag) | |
| sps_dmvd_cost_function_idx | ue(v) |

(continued)

| | |
|---|---|
| } | |

In Table 12 above, sps_dmvd_cost_function_idx may be information (index) about a cost function used in a motion vector correction technique based on template matching. According to the index and the table in Table 13, the cost function may be derived.

[Table 13]

| sps_dmvd_cost_function_idx | Cost function |
|---|---|
| 0 | SAD |
| 1 | SSE |
| 2 | MR-SAD |
| 3 | HAD |

Table 13 above may be predefined in the image encoding apparatus and the image decoding apparatus. The range of the syntax value and/or the cost function are only examples and are not limited to the above-described examples, and various other combinations may be possible.

In addition, the information about the cost function may be transmitted at any other high level, such as a picture parameter set or a picture header, in addition to the above-described SPS.

**Embodiment 6**

According to the present embodiment, information about the cost function may be commonly signaled for techniques based on the template matching cost. For example, the information about the cost function may be transmitted from an image encoding apparatus to an image decoding apparatus using high-level syntax such as a sequence parameter set (SPS) or a picture parameter set (PPS).

According to the present embodiment, the information about cost function for calculating the template matching cost, which is common to techniques based on template matching cost, may be signaled, for example, as in Table 14.

[Table 14]

| seq_parameter_set_rbsp( ) { | Descriptor |
|---|---|
| ... | |
| sps_cost_function_idx | ue(v) |
| } | |

In Table 14 above, sps_cost_function_idx may be information (index) about a cost function commonly used in techniques based on template matching. According to the index and the table in Table 15, a cost function may be derived.

[Table 15]

| sps_cost_function_idx | Cost function |
|---|---|
| 0 | SAD |
| 1 | SSE |
| 2 | MR-SAD |
| 3 | HAD |

Table 15 above may be predefined in the image encoding apparatus and the image decoding apparatus. The range of the syntax value and/or the cost function are only examples and are not limited to the above-described examples, and various other combinations may be possible.

In addition, the information about the cost function may be transmitted at any other high level, such as a picture parameter set or a picture header, in addition to the above-described SPS.

The present embodiment relates to signaling of information about the cost function that is commonly applied to all techniques based on template matching. However, as a modification, when different cost functions are used for each technique, information about the cost function may be separately signaled for each technique by additionally transmitting separate syntax as in Embodiment 4 or Embodiment 5 above. When the separate syntax is additionally transmitted as described above, the cost function for the technique may be derived by the cost function information separately signaled for the technique instead of the information about the common cost function.

Hereinafter, the cost functions commonly described in Embodiments 4 to 6 will be described.

When the template of a current block is called curT and the template of a reference block specified by a motion vector is called refT, the cost function may be defined as follows. Here, n may represent the size of the template (or number of pixels).

SAD (sum of absolute difference) may represent the sum of the absolute values of the differences between the template of the current block and the template of the reference block, and may be calculated by Equation 1.

[Equation 1]

$$\sum_{k=0}^{n-1} |curT_k - refT_k|$$

SSE (sum of square error) may represent the sum of the squares of the differences between the template of the current block and the template of the reference block, and may be calculated by Equation 2.

[Equation 2]

$$\sum_{k=0}^{n-1} (curT_k - refT_k)^2$$

MR-SAD (mean removal SAD) may represent the sum of the absolute values of the differences obtained by subtracting the average value from the template of the current block and the template of the reference block, and may be calculated by Equation 3.

[Equation 3]

$$\sum_{k=0}^{n-1} |curT_k - refT_k - MD| \ , where \ MD = \overline{curT} - \overline{refT}$$

In Equation 3, $\overline{curT}$ and $\overline{refT}$ may represent the template mean of the current block and the template mean of the reference block, respectively.

HAD (hadamard absolute difference) may be calculated by the existing Hadamard transform, and the detailed derivation process will be omitted.

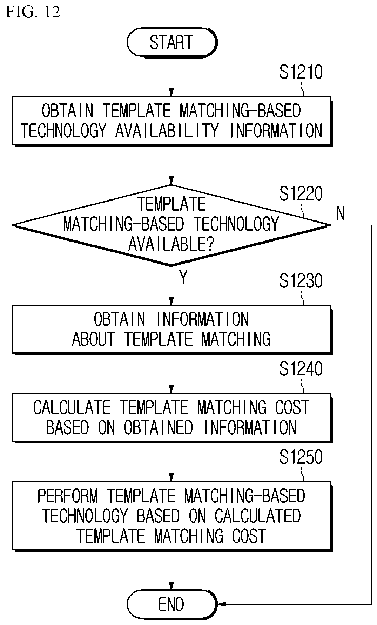

FIG. 12 is a diagram for explaining an image decoding method of performing Embodiments 1 to 6 of the present disclosure. The image decoding method of FIG. 12 may be performed by an image decoding apparatus. In some embodiments, some of the steps included in FIG. 12 may be omitted, new steps may be added, or the execution order may be changed. In FIG. 12, the template matching-based technology may include reordering of merge candidates based on template matching, motion vector correction based on template matching, etc.

As illustrated in FIG. 12, information indicating whether template matching-based technology is available may be obtained in step S1210. The template matching-based technology availability information may include, for example, sps_aml_enabled_flag or sps_dmvd_enabled_flag described above. Based on the template matching-based technology availability information obtained in step S1210, it may be determined whether template matching-based technology is available (S1220). Alternatively, if the template matching-based technology is always available, steps S1210 and S1220 may be omitted.

If the template matching-based technology is not available, the procedure of FIG. 12 related to the template matching-based technology may be terminated. If the template matching-based technology is available, information about template matching may be obtained (S1230). The information about template matching may include, for example, information about the size of a template required for calculating the cost of the template matching described above or information about a cost function used for calculating the cost of the template matching.

Thereafter, for the current block to which the template matching-based technology is applied, the template matching cost may be calculated based on the information obtained in step S1230 (S1240). For example, the template matching cost for the current block may be derived using the size of the template derived based on the information about the size of the template and/or the cost function determined based on the information about the cost function. Thereafter, prediction for the current block may be performed by performing the template matching-based technology based on the derived template matching cost (S1250).

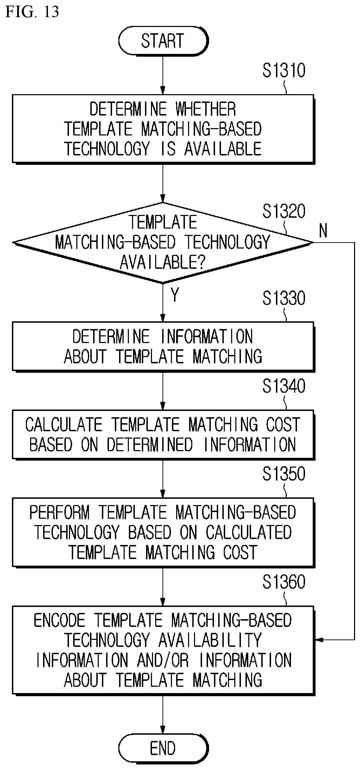

FIG. 13 is a diagram for explaining an image decoding method of performing Embodiments 1 to 6 of the present disclosure. The image decoding method of FIG. 13 may be performed by an image encoding apparatus. In some embodiments, some of the steps included in FIG. 13 may be omitted, new steps may be added, or the execution order may be changed. In FIG. 13, the template matching-based technology may include reordering of merge candidates based on template matching, motion vector correction based on template matching, etc.

As illustrated in FIG. 13, in step S1310, it may be determined whether a template matching-based technology is available. Template matching-based technology availability information may be encoded based on the determination in step S1310. The template matching-based technology availability information may include, for example, sps_aml_enabled_flag or sps_dmvd_enabled_flag described above. In step S1320, it is determined whether the template matching-based technology is available, and if the template matching-based technology is not available, the template matching-based technology availability information is encoded and the procedure of FIG. 13 may be terminated. If the template matching-based technology is always available, steps S1310 and S1320 may be omitted.

If a template matching-based technology is available, information about template matching may be determined (S1330). The information about template matching may include, for example, information about the size of a template required for calculating the cost of the template matching described above or information about a cost function used for calculating the cost of the template matching.

Thereafter, for the current block to which the template matching-based technology is applied, the template matching cost may be calculated based on the information determined in step S1330 (S1340). For example, the template matching cost for the current block may be derived using the information about the size of the template derived based on the information about the size of the template and/or the cost function determined based on the information about the cost function. Thereafter, prediction for the current block may be performed by performing the template matching-based technology based on the derived template matching cost (S1350). In addition, the template matching-based technology availability information and information about template matching may be encoded (S1360).

According to the embodiments described with reference to Embodiments 1 to 6 of the present disclosure and FIGS. 12 and 13, adaptive application of template matching-based technology may be made possible. Accordingly, encoding efficiency according to application of template matching-based technology can be improved, and thus compression efficiency of an image can be improved.

## Embodiment 7

According to the present embodiment, the position and/or size of the template required for calculating the cost of template matching may be variably set. For example, the position and/or size of the template may be variably set based on the encoding information of the current block or the size information of the current block.

When using the neighboring pixel information of the current block and the neighboring pixel information of the reference block to calculate the cost of template matching, a combination of one or two or more of the following examples (Examples 1 to 6) may be used. Hereinafter, the "corresponding block" may be the "current block" and/or the "reference block".

Example 1) All neighboring pixels of the corresponding block may be used, but neighboring pixels greater in number than the number of pixels within the corresponding block may be used.

Example 2) All neighboring pixels of the corresponding block may be used, but neighboring pixels equal in number to the number of pixels within the corresponding block may be used.

Example 3) Only one or more of the neighboring pixels of the corresponding block may be used.

Example 4) Only one or more of the neighboring pixels of the corresponding block may be used, but may be used in a subsampled form.

Example 5) Only one or more of the neighboring pixels of the corresponding block may be used, but some of the neighboring pixels at an arbitrary position may be used.

Example 6) Specific pixel(s) representing the neighboring pixels of the corresponding block may be selected and used. For example, two neighboring pixels (a neighboring pixel with a maximum sample value and a neighboring pixel with a minimum sample value) among available neighboring pixels may be used. In this case, pixels other than the selected specific pixel(s) among the neighboring pixels may not be used.

The selection of the neighboring pixel information may be performed based on the width and/or height of the corresponding block. For example, by arbitrarily determining the maximum available pixel size, all neighboring pixels may be used up to a certain width or height, and only some pixels may be selected and used when the width or height is larger than that.

As another example, a subsampling ratio may be set so that some pixels are adaptively selected according to the width or height. For example, if the subsampling ratio is 2 and the width or height is 4, only 2 neighboring pixels may be selected and used, and if the width or height is 8, only 4 neighboring pixels may be selected and used.

As another example, the selection of the neighboring pixel information may be performed based on an arbitrary threshold. For example, the values of the neighboring pixels may be compared with the threshold, and only neighboring pixels having values greater than the threshold may be selected and used. Alternatively, the values of the neighboring pixels may be compared with the threshold, and only neighboring pixels having values less than the threshold may be selected and used.

It will be apparent to those skilled in the art that the above-described methods may optionally be combined and used.

The subsampling ratio or arbitrary threshold may be defined in advance and used in the image encoding apparatus and the image decoding apparatus. Alternatively, the subsampling ratio or arbitrary threshold may be included in a specific header (SPS, PPS, Picture Header, Slice Header, etc.) and transmitted (signaled) from the image encoding apparatus to the image decoding apparatus.

FIG. 14 is a diagram for explaining various examples of selectable templates according to an embodiment of the present disclosure. The examples illustrated in FIG. 14 may correspond to any one of Examples 1 to 6 described above.

The shaded portions in FIG. 14 are examples of templates required for calculating the cost of template matching. As illustrated in FIG. 14, the position and/or size of the template may be variably set.

According to another example of the present disclosure, when selecting the neighboring pixel information, a combination of one or two or more of the following examples (Examples 7 to 12) may be applied. Hereinafter, the "corresponding block" below may be the "current block" and/or the "reference block".

Example 7) The neighboring pixels may be selected from one reference line adjacent to the corresponding block.

Example 8) The neighboring pixels may be selected from one reference line not adjacent to the corresponding block.

Example 9) The neighboring pixels may be selected from an area composed of two or more reference lines adjacent to the corresponding block.

Example 10) The neighboring pixels may be selected from an area composed of one or more reference line(s) adjacent to the left side of the corresponding block.

Example 11) The neighboring pixels may be selected from an area composed of one or more reference line(s) adjacent to the top of the corresponding block.

Example 12) The neighboring pixels may be selected from an area composed of a combination of two or more of the methods of Example a) to Example e).

FIG. 15 is a diagram for explaining various examples of selectable templates according to another embodiment of the present disclosure. The examples illustrated in FIG. 15 may correspond to any one of Examples 7 to 11 described above.

The shaded portions in FIG. 15 are examples of templates required for calculating the cost of template matching. As illustrated in FIG. 15, the position and/or size of the template may be variably set.

As a method for selecting an area to which the neighboring pixel information belongs, as described with reference to FIG. 15, the width and height of a block may be used as criteria. According to the present disclosure, for example, the minimum number of pixels required to derive the template matching cost may be arbitrarily determined. At this time, if a block has a specific width or a specific height that may secure the minimum number of pixels with only an area of one reference line, the neighboring pixels may be selected from an area of one reference line that is adjacent or not adjacent to the corresponding block. However, otherwise, the neighboring pixels may be selected from an area composed of two or more reference lines.

According to another example of the present disclosure, an arbitrary threshold may be used as a method for selecting the neighboring pixel information. For example, the values of the neighboring pixels may be compared with the threshold, and only the neighboring pixels having values greater than the threshold may be selectively used. Alternatively, the values of the neighboring pixels may be compared with the threshold, and only the neighboring pixels having values less than the threshold may be selectively used. In this case, if the minimum number of pixels required for template matching may be secured from one adjacent or non-adjacent reference line area, the neighboring pixels may be selected only from an area composed of one reference line. Otherwise, the neighboring pixels required for calculating the template matching cost may be secured from an area composed of multiple reference lines.

Information for selecting an area to which the neighboring pixels belong may be defined in advance in the image encoding apparatus and the image decoding apparatus. Alternatively, information for selecting an area to which the neighboring pixels belong may be included in a specific header (such as SPS, PPS, Picture Header, Slice Header, etc.) and transmitted from the image encoding apparatus to the image decoding apparatus. Alternatively, the area to which the neighboring pixels belong may be derived according to a method defined in advance in the image encoding apparatus and the image decoding apparatus based on information included and signaled in a specific header and the size (width and/or height) of the corresponding block.

According to another example of the present disclosure, when performing reordering of merge candidates based on template matching, the position of the template for calculating the template matching cost may be determined based on the position of the merge candidate. For example, if the merge candidate is a left block of the current block, the template matching cost may be calculated using only the left template. In addition, if the merge candidate is an upper block of the current block, the template matching cost may be calculated using only the upper template.

According to another example of the present disclosure, when performing reordering of merge candidates based on template matching, the position and/or size of the template for calculating the template matching cost may be adaptively determined according to the type of the merge candidate. Here, the type of the merge candidate may mean a spatial motion vector candidate, a temporal motion vector candidate, a non-adjacent spatial motion vector candidate, a history-based motion vector candidate, etc.

In the above-described examples, when selecting a template to perform reordering of merge candidates based on template matching, the number of pixels used for the template cost may differ between merge candidates. According to the present disclosure, in order to fairly compare template costs between merge candidates, the template cost may be normalized by the number of pixels used for the template cost.

According to another example of the present disclosure, the template for calculating the template matching cost may be adaptively determined based on the directionality of the motion vector. More specifically, the template may be selected based on a difference in magnitude between the motion vector in the x-axis direction and the motion vector in the y-axis direction. Alternatively, the size of the template may be adjusted based on the magnitude of the absolute value of the motion vector.

According to the present embodiment, it becomes possible to adaptively/variably select the position and/or size of the template, thereby enabling more accurate calculation of the template matching cost. Therefore, according to the present embodiment, the image encoding efficiency based on the template matching cost can be improved.

The various examples described in the present embodiment may be combined and used. For example, the method of selecting neighboring pixels according to (c) of FIG. 14 and the method of selecting neighboring pixels according to (b) of FIG. 15 may be combined, in which case one or more of some of neighboring pixels may be selected from a single reference line that is not adjacent to the corresponding block.

Alternatively, at least two selection methods among the selection methods of neighboring pixels described in the present embodiment may be used, and a final cost may be calculated by a weighted sum of the template matching costs calculated based on the selection methods, and a technology based on the template matching cost may be performed based on the final cost.

Alternatively, one of the selection methods of the neighboring pixels described in the present embodiment may be selected based on the size of the current block and/or the shape of the current block. For example, if the aspect ratio of the current block is greater than or less than the threshold, the neighboring pixels may be selected from the left area of (d) of FIG. 15 or the upper area of (e) of FIG. 15.

## Embodiment 8

According to the present embodiment, the template matching cost may be derived (adjusted) through a weighted sum of the template matching cost and the spatial similarity cost of the template.

For example, when the similarity between the template of the reference block and the pixel of the reference block is low or has different statistical characteristics, reordering of merge candidates based on template matching may not help improve encoding efficiency or may rather result in deterioration of encoding performance. According to the present disclosure, in order to increase the accuracy of the template matching cost, the final template cost may be calculated by additionally using the spatial similarity cost in addition to the existing template cost.

The spatial similarity cost may be calculated based on a difference between the template of the reference block and the pixel value in the reference block adjacent to the template. The spatial similarity of the reference template may also be expressed as the reliability of the reference template.

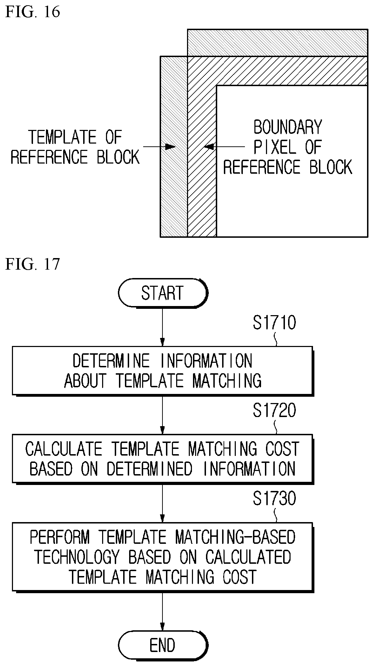

FIG. 16 is a diagram illustrating a template of a reference block and a boundary pixel of the reference block for calculating a spatial similarity cost.

When the reference template of a reference block specified by a motion vector is refT and the boundary pixel in the reference block adjacent to the reference template is refB, the spatial similarity cost may be calculated, for example, as in Equation 4.

[Equation 4]

$$\sum_{k=0}^{n-1} |refT_k - refB_k|$$

In Equation 4 above, n may represent the size of the template (or number of pixels).

Equation 4 above is a cost calculation equation based on SAD similar to Equation 1 above. However, the method of calculating the spatial similarity cost is not limited to Equation 4 above, and it is obvious to those skilled in the art that various methods (e.g., Equations 1 to 3, etc.) based on the difference between refT and refB may be used.

The final cost of template matching may be derived as a weighted sum of the template cost and the spatial similarity cost, for example, as follows:

$$\text{Final cost} = a * \text{template\_cost} + b * \text{spatial\_similarity\_cost}$$

In the above, the template cost may be derived by one of the template cost functions described in the various embodiments described above, and the spatial similarity cost may be derived according to the method described in the present embodiment. In the above, the weight a of the template cost and the weight b of the spatial similarity cost may be explicitly signaled by being included in a predetermined header (e.g., SPS, PPS, Picture Header, Slice Header, etc.). Alternatively, the weight may be derived as a value predefined in the image encoding apparatus and the image decoding apparatus based on the current block size and/or the encoding information of the current block. Alternatively, the weight may be derived by a combination of the current block size and/or the encoding information of the current block and information signaled through a bitstream.

According to the present embodiment, by adjusting the cost of template matching by considering the spatial similarity of reference templates, it becomes possible to calculate a more accurate template matching cost, and thus image encoding efficiency based on the template matching cost can be made more sophisticated.

**Embodiment 9**

According to the present embodiment, the cost function of template matching may have different weights based on the magnitude of the motion vector, the position of the motion vector, and/or the type of the motion vector.

According to Embodiment 7 above, the direction of the template or the size of the template may be adaptively selected depending on the type of the merge candidate. Similarly, according to the present embodiment, the weight of the template matching cost may be adjusted depending on the type of the merge candidate. More specifically, different weights may be applied to the template matching cost depending on the type of the merge candidate, such as a spatial motion vector candidate, a temporal motion vector candidate, a non-adjacent-spatial motion vector candidate, and a history-based motion vector candidate, as follows.

$$\text{Final cost} = a_{\text{merge\_type}} * \text{template\_cost}$$

In the above, $a_{\text{merge\_type}}$ means a weight according to the type of the corresponding merge candidate, and the template cost may be derived by one of the template cost functions described in the various embodiments described above.

For example, if the weight of a spatial motion vector candidate is set lower than the weight of a non-adjacent spatial motion vector candidate, the final template cost for the spatial motion vector candidate is relatively lowered. Therefore, the spatial motion vector candidate may be adjusted to be selected more than the non-adjacent spatial motion vector candidate. That is, compression efficiency can be improved by applying a weight value according to the type of the merge candidate according to the statistical characteristics of the image to adjust the selection rate of a specific merge candidate. The weight according to the type of the merge candidate may be explicitly signaled by being included in a predetermined header (such as SPS, PPS, Picture Header, Slice Header, etc.), or may be derived as a predefined value in the image encoding apparatus and the image decoding apparatus based on the current block size and/or the encoding information of the current block. Alternatively, the weight may be derived by a combination of the current block size and/or the encoding information of the current block and information signaled through a bitstream.

In addition, according to Embodiment 7 above, when performing motion vector correction based on template matching, the direction and/or size of the template may be selected based on the magnitude of the motion vector or a difference between the x-direction component and the y-direction component of the motion vector. Similarly, according to another embodiment of the present disclosure, the weight may be adjusted based on the magnitude of the motion vector. More specifically, different weights may be applied as follows based on the magnitude of the absolute value of the motion vector or the difference between the x-direction component and the y-direction component of the motion vector.

$$\text{Final cost} = a_{abs\_mv} * \text{template\_cost}$$

In the above, $a_{abs\_mv}$ means a weight according to the magnitude of the absolute value of the motion vector or the difference between the x-direction component and the y-direction component of the motion vector, and the template cost may be derived by one of the template cost functions described in the various embodiments described above.

For example, if the magnitude of the absolute value of the motion vector is small and the weight is set low, the final template matching cost can be lowered. That is, by applying different weights according to the magnitude of the motion vector according to the statistical characteristics of the image, the motion vector indicating a reference block at a position more similar to the position of the current block may be adjusted to be selected. The weight according to the magnitude of the absolute value of the motion vector or the difference between the x-direction component and the y-direction component of the motion vector may be explicitly signaled by being included in a predetermined header (such as SPS, PPS, Picture Header, Slice Header, etc.), or may be derived as a value predefined in the image encoding apparatus and the image decoding apparatus based on the current block size and/or the encoding information of the current block. Alternatively, the weight may be derived by a combination of the current block size and/or the encoding information of the current block and information signaled through a bitstream.

This embodiment may be combined with Embodiment 8 of the present disclosure to derive the final cost as follows, for example:

$$\text{Final cost} = a_{merge\_type} * \text{template\_cost} + b * \text{spatial\_similarity\_cost}$$

In the above, $a_{merge\_type}$ means a weight according to the type of the corresponding merge candidate, and this may be replaced with $a_{abs\_mv}$, which is a weight according to the magnitude of the absolute value of the motion vector or the difference between the x-direction component and the y-direction component of the motion vector, depending on the technology. In addition, b means a weight for the spatial similarity cost.

In the above, the template cost may be derived by one of the template cost functions described in the various embodiments described above, and the spatial similarity cost may be derived according to the method described in Embodiment 8 of the present disclosure. In the above, the weights $a_{abs\_mv}$ and the weights b may be explicitly signaled by being included in a predetermined header (e.g., SPS, PPS, Picture Header, Slice Header, etc.). Alternatively, the weights may be derived as values predefined in the image encoding apparatus and the image decoding apparatus based on a current block size and/or encoding information of a current block. Alternatively, the weights may be derived by a combination of the current block size and/or encoding information of the current block and information signaled through a bitstream.

Two or more of the various embodiments described in the present disclosure may be combined. For example, by combining Embodiments 3 and 7, an embodiment may be derived that uses different template sizes depending on the position of the template area or the size/shape of the block. Alternatively, by combining Embodiments 6 and 7, an embodiment may be derived that applies different cost functions to the same (or different) template areas and then calculates the final cost by a weighted sum. Alternatively, by combining Embodiments 3 and 8, an embodiment may be derived that variably determines the size of the upper template or the left template based on the reliability cost. Alternatively, by combining embodiments 7 and 8, an embodiment may be derived that determines the size and/or position of the template area based on the reliability cost. Furthermore, examples of combinations of two or more embodiments are not limited to the examples described above, except the cases where combinations of embodiments are not possible.

According to the present disclosure, it is possible to calculate a more precise template matching cost depending on the type of merge candidate, the size of the motion vector, etc., and thus, it is expected that encoding efficiency based on template matching will be improved.

FIG. 17 is a diagram for explaining an image decoding method according to at least one of the embodiments of the present disclosure.

The image decoding method of FIG. 17 may be performed in an image decoding apparatus.

When a template matching cost-based technology is applied to a current block, the image decoding apparatus may determine various information for calculating a template matching cost (S1710). The various information of step S1710 includes not only the size of the template and the cost function described above, but also the position of the template, the threshold, the method of selecting neighboring pixel information, and an area, to which neighboring pixels belong, which are described in Embodiment 7 of the present disclosure, various weights, a final cost function, etc. which are described in Embodiment 8 or Embodiment 9 of the present disclosure, and may include at least one of all information for calculating the template matching cost according to at least one of the various embodiments of the present disclosure. The determination of the various information in step S1710 may be performed based on various conditions such as information signaled through a predetermined header in a bitstream, information predefined in the image encoding apparatus and the image decoding apparatus, the size (width and/or height) of a block, encoding information of a block, the type of a merge candidate, and the magnitude of a motion vector, as described in the embodiments of the present disclosure.

When information for calculating the cost of template matching is determined in step S1710, the template matching cost may be calculated based on the determined information (S1720). According to one embodiment, the template matching cost may be adjusted by a weighted sum with the spatial similarity cost. In addition, according to another embodiment, the template matching cost may be weighted based on the type of the merge candidate, the size of the motion vector, etc. According to another embodiment, the template matching cost may be weighted based on the type of the merge candidate, the magnitude of the motion vector, etc., and adjusted by a weighted sum with the spatial similarity cost.

When the template matching cost is finally calculated in step S1720, a template matching-based technology may be performed based on the calculated template matching cost (S1730). The template matching-based technology is as described with reference to FIGS. 12 and 13.

In addition, the method of FIG. 17 may be performed as a part of an image encoding method in an image encoding apparatus. That is, the description of FIG. 17 regarding the image decoding method may be equally applied to the image encoding method. Accordingly, the image encoding apparatus may determine information about template matching based on the various conditions described above (S1710), calculate a template matching cost based on the determined information (S1720), and then perform a template matching-based technology based on the calculated template matching cost (S1730). However, the image encoding apparatus may not use information signaled through a predetermined header in a bitstream in order to determine information about template matching. Instead, since the image encoding apparatus is an apparatus that generates a bitstream, information that needs to be transmitted to the image decoding apparatus among the various conditions described above for determining the information about template matching may be encoded in a predetermined header of the bitstream.

According to the present disclosure, the calculation of template matching cost can be adaptively made more accurate. Accordingly, the effect of improving the encoding efficiency of template matching-based technology can be expected.

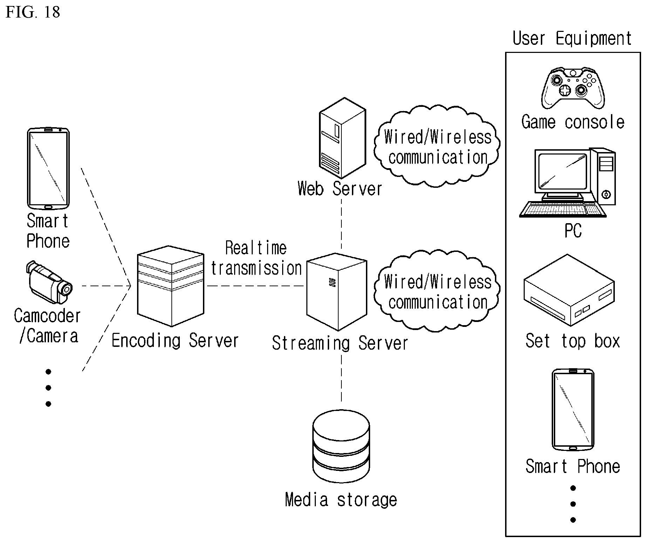

FIG. 18 is a view showing a content streaming system, to which an embodiment of the present disclosure is applicable.

As shown in FIG. 18, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be

**EP 4 510 563 A1**

executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   determining information about template matching for a current block on which a template matching-based technology is performed;
   calculating a template matching cost based on the determined information about template matching; and
   performing the template matching-based technology based on the calculated template matching cost.

2. The image decoding method of claim 1, wherein the information about template matching comprises information about a size of a template for calculating the template matching cost or information about a difference based function for calculating the template matching cost.

3. The image decoding method of claim 2, wherein the information about the size of the template or the information about the difference based function is included and signaled in a high level of the current block.

4. The image decoding method of claim 2, wherein the information about the size of the template or the information about the difference based function varies depending on the template matching-based technology.

5. The image decoding method of claim 1, wherein a template for calculating the template matching cost is adaptively determined based on encoding information of the current block or a size of the current block.

6. The image decoding method of claim 5, wherein a template for calculating the template matching cost is adaptively determined based on comparison between the size of the current block and a predetermined threshold.

7. The image decoding method of claim 5, wherein a template for calculating the template matching cost is adaptively determined based on a position or type of a merge candidate that is a target of template matching cost calculation.

8. The image decoding method of claim 5, wherein a template for calculating the template matching cost is adaptively determined based on a magnitude of a motion vector or a directionality of a motion vector that is a target of template matching cost calculation.

9. The image decoding method of claim 1,

   wherein the template matching cost is adjusted by a weighted sum of the template matching cost and a spatial similarity cost, and
   wherein the spatial similarity cost is derived based on a difference between a reference template adjacent to a reference block and a pixel value of a pixel in the reference block adjacent to the reference template.

10. The image decoding method of claim 9, wherein a weight of the weighted sum is included and signaled in a high level of the current block or is derived based on a size of the current block or encoding information of the current block.

11. The image decoding method of claim 1, wherein the template matching cost is adjusted to a value obtained by applying a weight to the template matching cost.

12. The image decoding method of claim 11, wherein the weight is adaptively determined based on a position or type of a merge candidate that is a target of template matching calculation.

13. The image decoding method of claim 11, wherein the weight is adaptively determined based on a magnitude of a motion vector or directionality of the motion vector that is a target of template matching cost calculation.

28

14. An image encoding method performed by an image encoding apparatus, the image encoding method comprising:

determining information about template matching for a current block on which a template matching-based technology is performed;
calculating a template matching cost based on the determined information about template matching; and
performing the template matching-based technology based on the calculated template matching cost.

15. A method of transmitting a bitstream generated by an image encoding method, the image encoding method comprising:

determining information about template matching for a current block on which a template matching-based technology is performed;
calculating a template matching cost based on the determined information about template matching; and
performing the template matching-based technology based on the calculated template matching cost.

16. A non-transitory computer-readable recording medium storing a bitstream generated by the image encoding method of claim 14.

FIG. 1

FIG. 2

100 IMAGE ENCODING APPARATUS

INPUT IMAGE → IMAGE PARTITIONER (110) → (115) +/− → TRANSFORMER (120) → QUANTIZER (130) → ENTROPY ENCODER (190) → BITSTREAM

DEQUANTIZER (140) → INVERSE TRANSFORMER (150) → (155) → FILTER (160)

INTER PREDICTOR (180), INTRA PREDICTOR (185)

DPB, MEMORY (170)

FIG. 3

EP 4 510 563 A1

FIG. 4

180

181

ORIGINAL PICTURE

PREDICTION MODE
DETERMINATION UNIT

PREDICTION MODE INFORMATION
INFORMATION REGARDING
MOTION INFORMATION

182

MOTION INFORMATION
DERIVATION UNIT

REFERENCE PICTURE

183

PREDICTION SAMPLE

PREDICTION SAMPLE
DERIVATION UNIT

INTER PREDICTION UNIT

FIG. 5

START

S510

PERFORM PREDICTION (DETERMINE
INTER PREDICTION MODE, DERIVE
MOTION INFORMATION, AND
GENERATE PREDICTION SAMPLES

S520

DERIVE RESIDUAL SAMPLES
BASED ON PREDICTION SAMPLES

S530

ENCODE IMAGE INFORMATION
INCLUDING PREDICTION INFORMATION
AND RESIDUAL INFORMATION

END

FIG. 6

FIG. 7

FIG. 8

```
           ┌──────────┐
           │  START   │
           └────┬─────┘
                │                    S810
   ┌────────────▼─────────────────┐
   │ DETERMINE INTER PREDICTION MODE │
   └────────────┬─────────────────┘
                │                    S820
   ┌────────────▼─────────────────┐
   │   DERIVE MOTION INFORMATION   │
   └────────────┬─────────────────┘
                │                    S830
   ┌────────────▼─────────────────┐
   │  PERFORM PREDICTION BASED ON  │
   │      MOTION INFORMATION       │
   │ (GENERATE PREDICTION SAMPLE)  │
   └────────────┬─────────────────┘
                │
           ┌────▼─────┐
           │   END    │
           └──────────┘
```

FIG. 9

Reference picture                    Current picture

FIG. 10

Reference samples of the template
in reference list 0 (RT0)

Template (T)

Reference samples of the template
in reference list 1 (RT1)

Reference block

Current block

Reference block

MV of the merge candidate
in reference list 0

MV of the merge candidate
in reference list 1

Reference picture in reference list 0

Current picture

Reference picture in reference list 1

FIG. 11

Template (T)

| A | B | C | D |
| E | | | |
| F | Current block | | |
| G | | | |

Current picture

Constitute the above
reference template

A_ref   B_ref   C_ref   D_ref

Constitute
the left
reference
template

E_ref
F_ref
G_ref

| A | B | C | D |
| E | | | |
| F | Collocated block | | |
| G | | | |

Reference picture

FIG. 12

```
            ( START )

                 │
                 ▼                        S1210
   ┌─────────────────────────────────┐
   │ OBTAIN TEMPLATE MATCHING-BASED   │
   │ TECHNOLOGY AVAILABILITY INFORMATION │
   └─────────────────────────────────┘
                 │
                 ▼                        S1220
              TEMPLATE                        N
        MATCHING-BASED TECHNOLOGY ───────────┐
             AVAILABLE?                       │
                 │                            │
                 │ Y          S1230           │
                 ▼                            │
   ┌─────────────────────────────────┐        │
   │      OBTAIN INFORMATION          │        │
   │    ABOUT TEMPLATE MATCHING       │        │
   └─────────────────────────────────┘        │
                 │            S1240            │
                 ▼                            │
   ┌─────────────────────────────────┐        │
   │ CALCULATE TEMPLATE MATCHING COST │        │
   │  BASED ON OBTAINED INFORMATION   │        │
   └─────────────────────────────────┘        │
                 │            S1250            │
                 ▼                            │
   ┌─────────────────────────────────┐        │
   │ PERFORM TEMPLATE MATCHING-BASED  │        │
   │  TECHNOLOGY BASED ON CALCULATED  │        │
   │     TEMPLATE MATCHING COST       │        │
   └─────────────────────────────────┘        │
                 │                            │
                 ▼                            │
            (  END  ) ◄───────────────────────┘
```

FIG. 13

START

S1310
DETERMINE WHETHER
TEMPLATE MATCHING-BASED
TECHNOLOGY IS AVAILABLE

S1320
TEMPLATE
MATCHING-BASED TECHNOLOGY
AVAILABLE?

N

Y

S1330
DETERMINE INFORMATION
ABOUT TEMPLATE MATCHING

S1340
CALCULATE TEMPLATE MATCHING COST
BASED ON DETERMINED INFORMATION

S1350
PERFORM TEMPLATE MATCHING-BASED
TECHNOLOGY BASED ON CALCULATED
TEMPLATE MATCHING COST

S1360
ENCODE TEMPLATE MATCHING-BASED
TECHNOLOGY AVAILABILITY
INFORMATION AND/OR INFORMATION
ABOUT TEMPLATE MATCHING

END

FIG. 14

(a)

(b)

(c)

(d)

(e)

(f)

FIG. 15

(a)

(b)

(c)

(d)

(e)

FIG. 16

TEMPLATE OF
REFERENCE BLOCK

BOUNDARY
PIXEL OF
REFERENCE BLOCK

FIG. 17

START

S1710

DETERMINE INFORMATION
ABOUT TEMPLATE MATCHING

S1720

CALCULATE TEMPLATE MATCHING COST
BASED ON DETERMINED INFORMATION

S1730

PERFORM TEMPLATE MATCHING-BASED
TECHNOLOGY BASED ON CALCULATED
TEMPLATE MATCHING COST

END

FIG. 18

# EP 4 510 563 A1

<table>
<tr><td colspan="2"><strong>INTERNATIONAL SEARCH REPORT</strong></td><td>International application No.<br><strong>PCT/KR2023/004849</strong></td></tr>
</table>

**A. CLASSIFICATION OF SUBJECT MATTER**

**H04N 19/105**(2014.01)i; **H04N 19/577**(2014.01)i; **H04N 19/70**(2014.01)i; **H04N 19/52**(2014.01)i; **H04N 19/176**(2014.01)i

According to International Patent Classification (IPC) or to both national classification and IPC

**B. FIELDS SEARCHED**

Minimum documentation searched (classification system followed by classification symbols)

H04N 19/105(2014.01); H04N 19/11(2014.01); H04N 19/119(2014.01); H04N 19/124(2014.01); H04N 19/146(2014.01); H04N 19/159(2014.01); H04N 19/179(2014.01); H04N 19/52(2014.01); H04N 19/543(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 템플릿(template), 매칭(matching), 비용(cost), 블록(block), 함수(function)

**C. DOCUMENTS CONSIDERED TO BE RELEVANT**

| Category* | Citation of document, with indication, where appropriate, of the relevant passages | Relevant to claim No. |
|---|---|---|
| X | KR 10-1632126 B1 (QUALCOMM INCORPORATED) 24 June 2016 (2016-06-24)<br>See paragraphs [0004], [0013], [0024], [0042], [0048]-[0051], [0066]-[0069], [0073]-[0077] and [0080]; and figures 5-7b. | 1,14-16 |
| Y | | 2-13 |
| Y | KR 10-2020-0118861 A (ARRIS ENTERPRISES LLC) 16 October 2020 (2020-10-16)<br>See paragraphs [0055], [0062], [0065] and [0095]-[0096]; and figures 6 and 10. | 2-13 |
| Y | US 2016-0255349 A1 (ROH, Sung Ho) 01 September 2016 (2016-09-01)<br>See paragraphs [0082] and [0086]-[0087]; and claim 28. | 2-13 |
| X | KR 10-1909170 B1 (HUAWEI TECHNOLOGIES CO., LTD.) 17 October 2018 (2018-10-17)<br>See paragraphs [0028], [0056]-[0083], [0089], [0094] and [0141]. | 1,14-16 |
| X | KR 10-2021-0021971 A (SONY CORPORATION) 02 March 2021 (2021-03-02)<br>See paragraphs [0176], [0387] and [0623]. | 1,14-16 |

☐ Further documents are listed in the continuation of Box C.       ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 July 2023** | **11 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/004849**

| Patent document cited in search report | | | Publication date (day/month/year) | Patent family member(s) | | | Publication date (day/month/year) |
|---|---|---|---|---|---|---|---|
| KR | 10-1632126 | B1 | 24 June 2016 | CN | 102474622 | A | 23 May 2012 |
| | | | | CN | 102474622 | B | 29 April 2015 |
| | | | | EP | 2704442 | A1 | 05 March 2014 |
| | | | | EP | 2704442 | B1 | 04 April 2018 |
| | | | | JP | 2014-064301 | A | 10 April 2014 |
| | | | | JP | 5752771 | B2 | 22 July 2015 |
| | | | | KR | 10-1521336 | B1 | 18 May 2015 |
| | | | | KR | 10-2014-0068269 | A | 05 June 2014 |
| | | | | US | 2011-0002388 | A1 | 06 January 2011 |
| | | | | US | 8873626 | B2 | 28 October 2014 |
| | | | | WO | 2011-002809 | A2 | 06 January 2011 |
| | | | | WO | 2011-002809 | A3 | 23 June 2011 |
| KR | 10-2020-0118861 | A | 16 October 2020 | CN | 111903133 | A | 06 November 2020 |
| | | | | JP | 2021-514145 | A | 03 June 2021 |
| | | | | US | 2019-0253722 | A1 | 15 August 2019 |
| | | | | WO | 2019-161248 | A1 | 22 August 2019 |
| US | 2016-0255349 | A1 | 01 September 2016 | CN | 105933706 | A | 07 September 2016 |
| | | | | CN | 105933706 | B | 23 June 2020 |
| | | | | KR | 10-2016-0105203 | A | 06 September 2016 |
| | | | | US | 10070139 | B2 | 04 September 2018 |
| KR | 10-1909170 | B1 | 17 October 2018 | CN | 105338351 | A | 17 February 2016 |
| | | | | CN | 105338351 | B | 12 November 2019 |
| | | | | EP | 3139607 | A1 | 08 March 2017 |
| | | | | JP | 2017-521907 | A | 03 August 2017 |
| | | | | JP | 6423454 | B2 | 14 November 2018 |
| | | | | KR | 10-2017-0008848 | A | 24 January 2017 |
| | | | | US | 10219003 | B2 | 26 February 2019 |
| | | | | US | 2017-0078696 | A1 | 16 March 2017 |
| | | | | WO | 2015-180658 | A1 | 03 December 2015 |
| KR | 10-2021-0021971 | A | 02 March 2021 | CN | 112313956 | A | 02 February 2021 |
| | | | | EP | 3817387 | A1 | 05 May 2021 |
| | | | | JP | 2021-244669 | A1 | 08 July 2021 |
| | | | | US | 11533471 | B2 | 20 December 2022 |
| | | | | US | 2021-0266525 | A1 | 26 August 2021 |
| | | | | WO | 2019-244669 | A1 | 26 December 2019 |

Form PCT/ISA/210 (patent family annex) (July 2022)